# EUROPÄISCHE PATENTANMELDUNG

(11) **EP 0 757 245 A2**
(43) Veröffentlichungstag der Anmeldung: **05.02.1997**
(21) Anmeldenummer: 96108687.3
(22) Anmeldetag: 30.05.1996
(51) Int. Cl.: G01N 21/89

(54) **Vorrichtung zur Detektion streifenförmiger Oberflächenfehler**

(30) Priorität: 03.08.1995 DE 19528519
(71) Anmelder: TZN Forschungs- und Entwicklungszentrum Unterlüss GmbH, D-29345 Unterlüss (DE)
(72) Erfinder: Müller, Jörn, 42489 Wülfrath (DE); Giet, Johannes, Dr., 29345 Unterlüss (DE)
(74) Vertreter: Behrend, Rainer

(57) **Zusammenfassung**

Die Erfindung betrifft eine Vorrichtung zur Detektion streifenförmiger Oberflächenfehler (2) von Materialbahnen (1), wie Papier- oder Stoffbahnen o.dgl., mit einer eine Lichtquelle (3) und eine optische Empfangsvorrichtung (7-10) aufweisenden optischen Meßeinrichtung (3,7-10), wobei die optische Empfangsvorrichtung (7-10) einen Detektor (10) und ein materialbahnseitig angeordnetes Objektiv (8) enthält, und wobei der Signalausgang (11) des optischen Detektors (10) mit einer elektronischen Auswerteeinheit (13) verbunden ist.

Um zu erreichen, daß auch kontrastarme streifenförmige Oberflächenfehler mit einer derartigen Vorrichtung mit großer Genauigkeit erkannt werden, schlägt die Erfindung vor, als optische Meßeinrichtung (3,7-10) eine Transmissions- oder Reflektionsmeßeinrichtung zu verwenden, wobei als Detektor (10) eine CCD-Zeilenkamera dient und zwischen dem Objektiv (8) der Zeilenkamera (10) und der auf streifenförmige Oberflächenfehler (2) zu überprüfenden Materialbahn (1) ein als optisches Tiefpaßfilter wirkendes Anamorphot (7) angeordnet ist.

## Beschreibung

Die Erfindung betrifft eine Vorrichtung zur Detektion streifenförmiger Oberflächenfehler von Materialbahnen nach dem Oberbegriff des Anspruchs 1.

Insbesondere bei der Vergütung der Oberfläche von Papierbahnen mittels Streichmaschinen treten häufig streifenförmige Oberflächenfehler (sogenannte Rakelstreifen) auf, die sehr kontrastarm und daher mit dem menschlichen Auge kaum sichtbar sind. Da diese Streifen später nach dem Bedrucken des Papiers aber deutlich sichtbar hervortreten, sind auch die nach dem Vergütungsprozeß kaum erkennbaren Rakelstreifen nicht tolerierbar; d.h. sie müssen erkannt und die entsprechende Papierbahn muß als Ausschuß behandelt werden.

Soweit der Anmelderin bekannt, müssen die Rakelstreifen bisher entweder mit bloßem Auge bestimmt werden oder es werden optische Transmissions- und Reflektionssysteme eingesetzt, bei denen das an der Oberfläche gestreute und reflektierte Licht gemessen wird. Eine Ermittlung kontrastarmer Rakelstreifen oder anderer streifenförmiger Oberflächenfehler ist mit derartigen bekannten Verfahren und Vorrichtungen bisher allerdings nicht mit ausreichender Genauigkeit möglich.

Der vorliegenden Erfindung liegt die Aufgabe zugrunde, eine Vorrichtung der eingangs erwähnten Art derart weiterzuentwickeln, daß auch kontrastarne streifenförmige Oberflächenfehler mit großer Genauigkeit erkannt werden.

Diese Aufgabe wird durch die Merkmale des kennzeichnenden Teils des Anspruchs 1 gelöst. Weitere vorteilhafte Ausgestaltungen der Erfindung offenbaren die Unteransprüche.

Der Erfindung liegt der Gedanke zugrunde, die streifenförmigen Oberflächenfehler, je nach Fehlertyp, mit einer Reflektions-, oder einer Transmissionsmeßanordnung zu erfassen, wobei das Streulicht zur Messung herangezogen wird. Im wesentlichen wird dabei für die Detektion des Lichtes eine CCD-Zeilenkamera benutzt, welcher materialseitig eine anamorphotische Linse (Anamorphot, Zylinderlinse) vorgeschaltet ist, so daß das gestreute Licht (im Vergleich zu herkömmlichen Systemen mit CCD-Kameras, welche mit einer quadratischen Pixelapertur arbeiten) einer optischen Tiefpaßfilterung unterzogen wird und dadurch eine optische Mittelung des Streulichtes erfolgt, bevor es in den Detektor gelangt.

Mit der erfindungsgemäßen Vorrichtung ist es möglich, auch feinste Oberflächenfehler zu messen, da durch die optische Mittelung Helligkeitsschwankungen (Rauschen), die durch die Oberflächenbeschaffenheit und lokalen Inhomogenitäten (Wassergehalt der Papierbahn, Faserstruktur etc.) entstehen, weitgehend unterdrückt werden.

Als besonders vorteilhaft haben sich als Lichtquellen Natriumniederdrucklampen erwiesen. Diese unterstützen die Streifendetektion durch ihre große Lichthelligkeit sowie durch ihre monochromatischen Eigenschaften, so daß in Verbindung mit der spektralen Empfindlichkeit der jeweils verwendeten CCD-Kamera auch schwache Grauwertkontraste sichtbar werden.

Die Auswertung der Kamerasignale erfolgt mit Hilfe einer elektronischen Auswerteeinheit. In dieser werden zunächst die Kamerasignale digitalisiert und dann einer Mittelwertbildung zur weiteren Unterdrückung von Rauschanteile unterzogen. Anschließend erfolgt eine ständig adaptierende Shadingkorrektur, um Inhomogenitäten in der Beleuchtung zu berücksichtigen. Schließlich wird das derart korrigierte digitale Signal mittels eines nichtrekursiven Hochpaßfilters differenziert und mittels eines nachgeschalteten Schwellwertkomparators mit einstellbarer Schwelle detektiert.

Weitere Einzelheiten und Vorteile der Erfindung ergeben sich aus dem folgenden anhand einer Figur erläuterten Ausführungsbeispiel.

In der Fig. ist mit 1 eine auf Rakelstreifen 2 zu kontrollierende Papierbahn bezeichnet. Mit Hilfe einer Natriumniederdrucklampe 3, die ihre Strahlungsenergie monochromatisch bei einer Wellenlänge von ca. 580 nm abstrahlt, wird die untere Oberfläche 4 der Papierbahn 1 beleuchtet. Das auf der oberen Oberfläche 5 hervortretende Streulicht 6 gelangt über ein Anamorphot 7 und ein Objektiv 8 auf das CCD-Zeilenelement 9 einer entsprechenden Zeilenkamera 10, die die Papierbahn 1 zeilenweise abtastet. Die verwendete Kamera 10 ist in dem Wellenlängenbereich um 580nm besonders empfindlich.

Der Signalausgang 11 der Zeilenkamera 10 ist über eine entsprechende Leitung 12 mit einer elektronischen Auswerteein heit 13 verbunden. Die Auswerteeinheit enthält einen Analog-/Digitalwandler (AD-Wandler) 14 zur Digitalisierung der Kamerasignale. In einer nachgeschalteten Einheit 15 erfolgt durch Mittelwertbildung mehrerer nachfolgend empfangener Zeilensignale eine Unterdrückung der Rauschanteile des digitalisierten Kamerasignales. Außerdem findet in einer Einheit 16 eine ständige adaptierende Shadingkorrektur statt, um z.B. Inhomogenitäten in der Beleuchtung, oder die inhomogene Empfindlichkeit der verwendeten Sensoren, zu berücksichtigen.

Das derart korrigierte Signal wird mit Hilfe eines digitalen nichtrekursiven (FIR) Hochpaßfilters 17 differenziert. Ein nachgeschalteter Schwellwertkomparator 18 detektiert den streifenförmigen Oberflächenfehler in dem differenzierten Signal nach überschreiten einer einstellbaren Schwelle. Der Fehlerort und die Fehleramplitude, die mit dem Streifenkontrast korreliert, stehen einem Auswerte- bzw. Steuerrechner 19 der Auswerteeinheit 13 zur protokollierung und weiteren Auswertung zur Verfügung.

Selbstverständlich ist die Erfindung nicht auf das beschriebene Ausführungsbeispiel beschränkt. So braucht es sich insbesondere bei den Einheiten 15-18 der elektronischen Auswerteeinheit keineswegs um separate Hardware-Bausteine zu handeln. Vielmehr können die Funktionen dieser Einheiten -wie in der Bildverarbeitung allgemein üblich- auch softwaremäßig durch den Steuerrechner 19 ausgeführt werden.

Die erfindungsgemäße Vorrichtung ist auch nicht lediglich auf die Ermittlung von Rakelstreifen auf Papierbahnen beschränkt, sondern kann für die Streifendetektion beliebiger Materialien verwendet werden. Darüber hinaus eignet sich die Vorrichtung besonders zur Erkennung von Leadspuren in Materialien (Textil) bzw. zur Vermessung von bandförmigen Aufdrucken und Spuren (auf z.B. Folien).

### Bezugszeichenliste

- 1: Materialbahn, Papierbahn
- 2: streifenförmige Oberflächenfehler, Rakelstreifen
- 3: Lichtquelle, Natriumniederdrucklampe
- 4,5: Oberflächen
- 6: Streulicht
- 7: anamorphotische Linse, Anamorphot
- 8: Objektiv
- 9: CCD-Zeilenelement
- 10: optischer Detektor, CCD-Zeilenkamera
- 11: Signalausgang
- 12: Leitung
- 13: elektronische Auswerteeinheit
- 14: Analog-/Digitalwandler, AD-Wandler
- 15: Einheit zur Mittelwertbildung
- 16: Einheit zur Shadingkorrektur
- 17: Hochpaßfilter
- 18: Schwellwertdetektor
- 19: Steuerrechner

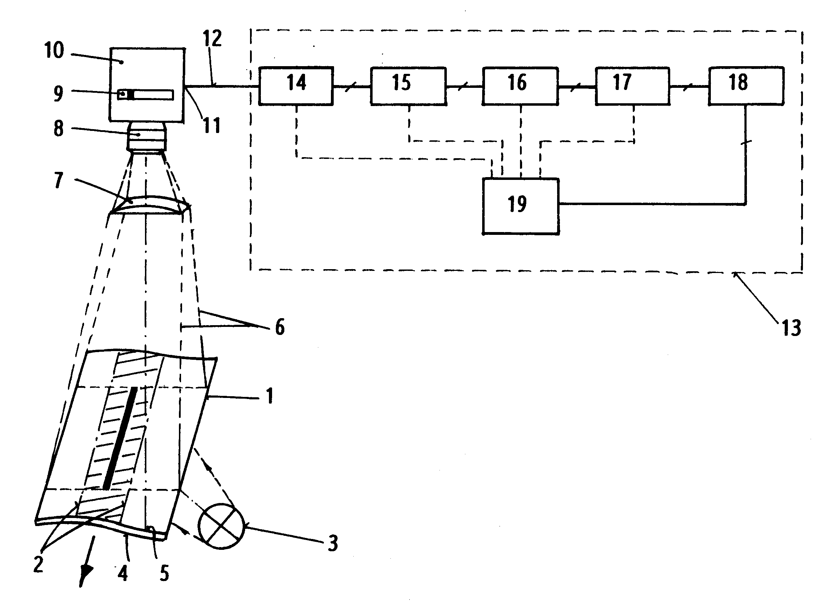

## Patentansprüche

1. Vorrichtung zur Detektion streifenförmiger Oberflächenfehler (2) von Materialbahnen (1), wie Papier- oder Stoffbahnen o.dgl., mit einer eine Lichtquelle (3) und eine optische Empfangsvorrichtung (7-10) aufweisenden optischen Meßeinrichtung (3,7-10), wobei die optische Empfangsvorrichtung (7-10) einen Detektor (10) und ein materialbahnseitig angeordnetes Objektiv (8) enthält, und wobei der Signalausgang (11) des optischen Detektors (10) mit einer elektronischen Auswerteeinheit (13) verbunden ist, **dadurch gekennzeichnet**, daß es sich bei der optischen Meßeinrichtung (3,7-10) um eine Transmissions- oder Reflektionsmeßeinrichtung handelt, daß die optische Empfangsvorrichtung (7-10) als Detektor (10) eine CCD-Zeilenkamera enthält, und daß zwischen dem Objektiv (8) der Zeilenkamera (10) und der auf streifenförmige Oberflächenfehler (2) zu überprüfenden Materialbahn (1) eine als optisches Tiefpaßfilter wirkende anamorphotische Linse (7) angeordnet ist.

2. Vorrichtung nach Anspruch 1, **dadurch gekennzeichnet**, daß als Lichtquelle (3) der optischen Meßeinrichtung (3,7-10) eine Natriumniederdrucklampe dient.

3. Vorrichtung nach Anspruch 1 oder 2, **dadurch gekennzeichnet**, daß die elektronische Auswerteeinheit (13) einen AD-Wandler (14) zur Digitalisierung der Kamerasignale aufweist, dessen Ausgang über eine Einheit (13) zur Rauschunterdrückung, eine Einheit (16) zur adaptiven Shadingkorrektur und ein digitales nichtrekursives Hochpaßfilter (17) mit einem Schwellwertkomparator (18) verbunden ist, und daß die Steuerung der Einheiten (14-18) und eine Weiterverarbeitung der am Ausgang des Schwellwertkomparators (18) liegenden Daten mit Hilfe eines Steuerrechners (19) erfolgt.
